Europäisches Patentamt

European Patent Office

Office européen des brevets

(19)

(11) Veröffentlichungsnummer : **0 106 279**
**B1**

(12)

# EUROPÄISCHE PATENTSCHRIFT

(45) Veröffentlichungstag der Patentschrift :
27.07.88

(51) Int. Cl.⁴ : **H 04 B 14/06, H 04 N  7/13**

(21) Anmeldenummer : 83109991.6

(22) Anmeldetag : 06.10.83

(54) Digitales Nachrichtenübertragungssystem, insbesondere Farbfernsehübertragungssystem.

(30) Priorität : 09.10.82 DE 3237578

(43) Veröffentlichungstag der Anmeldung :
25.04.84 Patentblatt 84/17

(45) Bekanntmachung des Hinweises auf die Patenterteilung : 27.07.88 Patentblatt 88/30

(84) Benannte Vertragsstaaten :
DE FR GB IT NL

(56) Entgegenhaltungen :
DE-B- 1 219 972
US-A- 3 824 590
FUJITSU SCIENTIFIC & TECHNICAL JOURNAL, Juni
1976, Seiten 123-138, Kawasaki, JP; M. ISHII et al.:
"Digital coding of NTSC signals using DPCM in the
hadamard-transformed domain"

(73) Patentinhaber : ALCATEL N.V.
Strawinskylaan 537 (World Trade Center)
NL-1077 XX Amsterdam (NL)
FR GB IT NL
Standard Elektrik Lorenz Aktiengesellschaft
Hellmuth-Hirth-Strasse 42
D-7000 Stuttgart 40 (DE)
DE

(72) Erfinder : Hentschke, Siegbert, Dr.
Uracher Weg 3
D-7146 Tamm (DE)
Erfinder : Schaper, Klaus
Müller-Thurgau-Weg 2
D-7000 Stuttgart 61 (DE)

(74) Vertreter : Graf, Georg Hugo, Dipl.-Ing. et al
Standard Elektrik Lorenz AG Patent- und Lizenzwesen Postfach 30 09 29
D-7000 Stuttgart 30 (DE)

## Beschreibung

Die Erfindung betrifft ein digitales Nachrichtenübertragungssystem nach dem Oberbegriff des Patentanspruchs 1.

Derartige Nachrichtenübertragungssysteme sind vielfältig bekannt, beispielsweise aus der DE-PS 23 55 676. Als Codierer und Decodierer ist dort ein DPCM-Codierer bzw. ein DPCM-Decodierer verwendet (DPCM = Differenzpulscodemodulation).

Eine Herabsetzung der Bitrate auf die Hälfte, die zur Fernsehbildübertragung wegen der vorgegebenen Abtastfrequenz und der vorgegebenen maximalen Bitrate auf der Übertragungsstrecke notwendig sein kann, ist bei einem DPCM-Codierer nur dadurch möglich, daß dieser die mit der Abtastfrequenz und einer Wortlänge von 8 Bits vorliegende Eingangs-Wortfolge in eine Ausgangswortfolge der gleichen Wortfolgefrequenz, jedoch mit halbierter Wortlänge, also 4 Bits pro Wort, umsetzt. Diese Codierung ist aber mit einer sichtbaren Qualitätseinbuße verbunden.

Es ist daher die Aufgabe der Erfindung, ein System der eingangs genannten Art anzugeben, bei dem die Bitrate auf der Übertragungsstrecke auf die Hälfte herabsetzbar ist, ohne daß die Übertragungsqualität sich verschlechtert.

Die Aufgabe wird wie im Patentanspruch 1 angegeben gelöst. Weiterbildungen ergeben sich aus den Unteransprüchen.

Die Erfindung wird nun anhand der Zeichnungen beispielsweise näher erläutert. Es zeigen :

Fig. 1 den sendeseitigen Codierer und

Fig. 2 den empfangsseitigen Decodierer des neuen Systems.

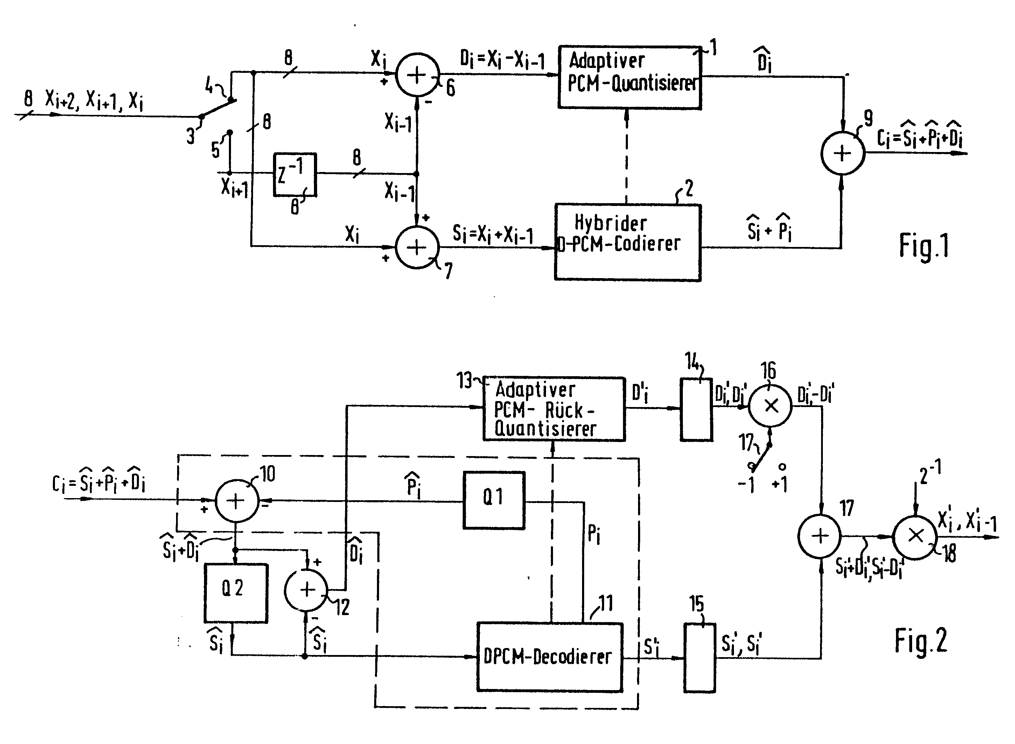

Der Codierer nach Fig. 1 besteht im wesentlichen aus einem adaptiven PCM-Quantisierer 1 und einem hybriden D-PCM-Codierer 2, der abhängig von seinem gerade auftretenden Prädiktionsfehler die Auswahl der Quantisierungskennlinie des adaptiven PCM-Quantisierers 1 steuert. Der hybride D-PCM-Codierer 2 bedarf keiner eigenen Beschreibung, da er aus IEEE Transactions on Communications, Vol. Com-26, No. 3, March 1978, S. 362 bis 368 bekannt ist.

Am Eingang des gesamten Codierers nach Fig. 1 erscheinen die mit 8 Bits pro Abtastwert linear quantisierten Abtastwerte des zu übertragenden Signals, das ein Sprachsignal oder insbesondere ein Fernsehsignal sein kann. Die aufeinanderfolgenden codierten Abtastwerte bilden also eine Wortfolge, die mit $X_i$, $X_{i+1}$, $X_{i+2}$ bezeichnet ist. Ein Schalter 3, dessen Umschalttakt (nicht gezeigt) die doppelte Periode der Eingangswortfolge hat, schaltet abwechselnd ein Eingangswort auf einen Anschluß 4 und das darauffolgende Eingangswort auf einen Anschluß 5. Gelangt beispielsweise das Wort $X_i$ auf den Anschluß 4, so gelangt zum Anschluß 5 das Wort $X_{i+1}$. Vom Anschluß 4 gelangt das Wort $X_i$ auf den positiven Eingang eines Addierers 6 und auf den positiven Eingang eines weiteren Addierers 7, wogegen das Wort $X_{i+1}$ vom Anschluß 5 über eine Verzögerungsstufe 8, deren Verzögerungszeit ein Wortfolgeperiode beträgt, zu einem negierenden Eingang des Addierers 6 und zu einem Eingang des Addierers 7 gelangt. Am Ausgang der Verzögerungsstufe 8, liegt also das Wort $X_{i-1}$, wenn an ihrem Eingang das Wort $X_{i+1}$ liegt. Somit bildet der Addierer 6 aus seinen Eingangswerten eine Differenz $D_i = X_i - X_{i-1}$, und der Addierer 7 bildet aus den gleichen Eingangswerten eine Summe $S_i = X_i + X_{i-1}$. Diese Werte $D_i$ und $S_i$ haben jeweils eine Wortfolgefrequenz, die gegenüber der Wortfolgefrequenz der Eingangswörter $X_i$ auf die Hälfte herabgesetzt ist. Die Wortfolge $D_i$ ist die Eingangswortfolge des genannten adaptiven PCM-Quantisierers 1, wogegen die Wortfolge $S_i$ die Eingangswortfolge des genannten hybriden D-PCM-Codierers 2 ist.

Der Codierer besteht also aus einem sogenannten Summenzweig, in dem die Summe zweier aufeinanderfolgender Eingangsworte codiert wird und aus einem Differenzzweig, in dem die Differenz derselben zwei aufeinanderfolgenden Eingangswörter codiert wird. Da ein hybrider D-PCM-Codierer bekanntlich ein Eingangswort $S_i$ in ein DPCM-codiertes Wort $\hat{S}_i$ umsetzt und zu diesem den PCM-codierten Prädiktionswert $\hat{P}_i$ hinzuaddiert, ist das aus $S_i$ entstehende Ausgangswort als Summe $\hat{S}_i + \hat{P}_i$ dargestellt. Im Differenzzweig bildet der adaptive PCM-Quantisierer 1 aus seinem Eingangswort $\hat{D}_i$ ein Codewort $D_i$. Durch Addition des Codewortes $\hat{D}_i$ vom Differenzzweig und des Codewortes $\hat{S}_i + \hat{P}_i$ vom Summenzweig in einem Addierer 9 entsteht schließlich das Leitungscodewort $C_i$, dessen Wortlänge ebenso wie die Wortlänge des Eingangswortes $X_i$ 8 Bits beträgt und dessen Wortfolgefrequenz auf die Hälfte herabgesetzt ist.

Anstelle eines Addierers 9 sind auch andere Schaltungen möglich, welche die beiden genannten Codewörter zum Leitungscodewort $C_i$ zusammenfügen. Beispielsweise können die beiden Codewörter einfach ohne Addition aneinander gereiht werden, wobei zweckmäßigerweise die Folge der Bits des hinteren Codewortes invertiert wird, damit Unsicherheiten beim Auftrennen des Codewortes $C_i$ in die beiden ursprünglichen Codewörter auf der Empfangsseite sich nur auf die jeweils niedrigstwertigen Bits beider Codewörter auswirken.

Die folgende Beschreibung des empfangsseitigen Decodierers nach Fig. 2 geht davon aus, daß das Leitungscodewort $C_i$ durch eine echte Addition der beiden vom Differenzzweig und vom Summenzweig gelieferten Codewörter gebildet worden ist. Vom empfangenen Leitungscodewort $C_i = \hat{S}_i + \hat{P}_i + \hat{D}_i$ wird in einem Addierer 10 wie beim bekannten hybriden D-PCM-Decodierer der quantisierte Prädiktionswert $\hat{P}_i$ subtrahiert, der in einem DPCM-Decodierer 11 vorhanden ist und in einem Quantisierer Q1 quantisiert wird. Der Addierer 10, der D-PCM-Decodierer 11 und der Quantisierer Q1 entsprechen somit dem bekann-

ten hybriden D-PCM-Decodierer, allerdings mit dem Unterschied, daß das Ausgangswort des Addierers 10 noch nicht für die DPCM-Decodierung verwendet werden kann, da es noch den additiv überlagerten Anteil $\hat{D}_i$ vom Differenzzweig enthält. Zur Ermittlung des vom Differenzzweig stammenden Anteils $\hat{D}_i$ des Ausgangswortes $\hat{S}_i + \hat{D}_i$ des Addierers 10 wird dieses einem Quantisierer Q2 zugeführt, der durch eine Quantisierung entsprechend der sendeseitig vorgenommenen DPCM-Codierung des Wortes $\hat{S}_i$ den Anteil $\hat{S}_i$ bestimmt. Da $\hat{S}_i + \hat{D}_i$ keiner Quantisierungsstufe der verwendeten DPCM-Codierung entspricht, wird $\hat{S}_i$ als der Wert der Quantisierungsstufe bestimmt, die unmittelbar unter dem Wert von $\hat{S}_i + \hat{D}_i$ liegt.

Der Eingang des Quantisierers Q2 ist mit einem positiven Eingang eines Addierers 12 verbunden, wogegen der Ausgang des Quantisierers Q2 mit einem negativen Eingang dieses Addierers verbunden ist, so daß am Ausgang dieses Addierers 12 das vom Differenzzweig stammende Wort $\hat{D}_i$ erscheint. Im Differenzzweig des empfangsseitigen Decodierers wird das Wort $\hat{D}_i$ in einem adaptiven PCM-Rückquantisierer in ein uncodiertes Wort $D'_i$ umgesetzt, das bis auf Übertragungsfehler dem im Codierer gebildeten Wort $D_i$ entspricht. Ebenso setzt der DPCM-Codierer im Summenzweig das vom Quantisierer Q2 ermittelte Wort $\hat{S}_i$ in ein uncodiertes Wort $S'_i$ um, das bis auf Übertragungsfehler dem im Codierer gebildeten Wort $\hat{S}_i$ entspricht. Wie im Codierer wird auch im Decodierer die Auswahl der Quantisierungskennlinie für die PCM-Rückquantisierung abhängig vom Prädiktionsfehler gesteuert, der innerhalb des DPCM-Decodierers auftritt. Wie bereits erwähnt, geschieht die Verarbeitung im sendeseitigen Codierer mit der halbierten Frequenz der ursprünglichen Wortfolge $X_i$ und mit der gleichen Frequenz im bisher beschriebenen Teil des Decodierers. Um aus den decodierten Wörtern $D'_i$ und $S'_i$ wieder die Wortfolge $X'_i$ mit der ursprünglichen Wortfolgefrequenz zu rekonstruieren, muß die nachstehend beschriebene weitere Verarbeitung wieder im ursprünglichen Takt der Wortfolge $X_i$ (Abtasttakt) stattfinden. Die Taktumsetzung findet in einem Zwischenspeicher 14 für das Differenzwort $D'_i$ und in einem Zwischenspeicher 15 für das Differenzwort $S'_i$ statt.

In die Zwischenspeicher 14 und 15 werden die Wörter $D'_i$ bzw. $S'_i$ mit der halben ursprünglichen Wortfolgefrequenz eingelesen und mit der ursprünglichen Wortfolgefrequenz wieder ausgelesen, so daß am Ausgang der Zwischenspeicher das Wort $D'_i$ bzw. $S'_i$ zweimal hintereinander erscheint. Im oben dargestellten Differenzzweig ist dem Zwischenspeicher 14 ein Multiplizierer 16 nachgeschaltet, der bei jedem zweiten seiner Eingangswörter das Vorzeichen invertiert. Dazu empfängt der Multiplizierer 16 an einem Steuereingang im Takt seiner Eingangswortfolge abwechselnde Steuersignale mit dem logischen Pegel —1 und +1 über einen Schalter 17, der im Takt der Eingangswortfolge zwischen zwei Anschlüssen wechselt, an denen die beiden logischen Pegel liegen. Die Wortfolge — $D'_i$, $D'_i$ vom Ausgang des Multiplizierers 16 und die Wortfolge $S'_i$, $S'_i$ vom Ausgang des Zwischenspeichers 15 gelangt auf einen Addierer 17, der daraus die Wortfolge $S'_i - D'_i$, $S'_i + D'_i$ bildet. Wie aus der sendeseitigen Summen- und Differenzbildung ersichtlich ist, ist diese Wortfolge gleich der mit dem Faktor 2 multiplizierten ursprünglichen Wortfolge. Die schließlich noch notwendige Halbierung besorgt ein Multiplizierer 18, der lediglich eine einfache Schiebeoperation ausführt und somit die ursprüngliche Wortfolge $X'_{i-1}$, $X'_i$ liefert, die bis auf Übertragungs- und Quantisierungsfehler mit der ursprünglichen Eingangswortfolge übereinstimmt.

Da der beschriebene Codierer eine Verarbeitung in zwei parallelen Wegen durchführt und dabei unter Verwendung einer hybriden D-PCM-Codierung eine Adaption leistet, läßt er sich mit dem Ausdruck « Adaptiver Zweiweg-Hybrid-Codierer » bezeichnen. Die entsprechende Bezeichnung für den Decodierer ist : « Adaptiver Zweiweg-Hybrid-Decodierer ».

## Patentansprüche

1. Digitales Nachrichtenübertragungssystem mit einer auf der Übertragungsstrecke herabgesetzten Bitrate, mit einem sendeseitigen Codierer, der eine Folge von digitalen Eingangswörtern in einen Leitungscode mit herabgesetzter Bitrate umsetzt und mit einem empfangsseitigen Decodierer, der den Leitungscode in eine Folge von digitalen Ausgangswörtern mit der ursprünglichen Bitrate umsetzt, dadurch gekennzeichnet, daß dieses System derart aufgebaut ist, daß im Codierer jeweils zwei aufeinanderfolgende Eingangswörter ($X_{i-1}$, $X_i$) zueinander addiert (7) und voneinander subtrahiert (6) werden, daß die Summe ($S_i$) in einem hybriden D-PCM-Codierer (2) in ein Summencodewort ($\hat{S}_i + \hat{P}_i$) und die Differenz ($D_i$) in einem adaptiven PCM-Quantisierer (1) in ein Differenzcodewort ($\hat{D}_i$) umgesetzt wird, daß anschließend das Summencodewort und das Differenzcodewort zum Leitungscodewort ($C_i$) zusammengefügt (9) werden, daß im empfangseitigen Decodierer vom empfangenen Leitungscodewort ($C_i$) das Differenzcodewort ($\hat{D}_i$) abgetrennt und das Summencodewort ($\hat{S}_i + \hat{P}_i$) in einem hybriden D-PCM-Decodierer (10, 11, Q1) decodiert und das Differenzcodewort ($\hat{D}_i$) in einem adaptiven PCM-Rückquantisierer (13) decodiert wird, daß aus den beiden decodierten Wörtern ($D'_i$, $S'_i$) durch aufeinanderfolgende Subtraktion und Addition und anschließende Halbierung die beiden ursprünglich codierten Eingangswörter ($X'_{i-1}$, $X'_i$) zurückgewonnen werden und daß die Auswahl der Quantisierungskennlinie im adaptiven PCM-Quantisierer (1) und im adaptiven PCM-Rückquantisierer (13) durch den hybriden D-PCM-Codierer (2) bzw. den hybriden D-PCM-Decodierer (10, 11, Q1) abhängig vom dort auftretenden Prädiktionsfehler gesteuert wird.

2. System nach Anspruch 1, dadurch gekennzeichnet, daß die Wortlänge des Leitungscodes ($C_i$) gleich der Wortlänge der Eingangswörter ($X_i$) gewählt ist, und daß die Quantisierungskennlinie des adaptiven PCM-Quantisierers derart gesteuert wird, daß die Wortlänge des aus dem Summencodewort und dem Differenzcodewort zusammengesetzten Leitungscodeworts maximal ausgenützt wird.

3. System nach Anspruch 1 oder 2, dadurch gekennzeichnet, daß im Decodierer vom empfangenen Leitungscodewort ($C_i$) der im hybriden DPCM-Codierer vorhandene quantisierte Prädiktionswert subtrahiert und durch Quantisierung des Ergebnisses entsprechend der sendeseitigen DPCM-Codierung das Eingangscodewort ($\hat{S}_i$) des DPCM-Decodierers (11) gewonnen wird.

4. System nach Anspruch 3, dadurch gekennzeichnet, daß durch Subtraktion des Eingangswortes ($\hat{S}_i$) des DPCM-Decodierers (11) vom unquantisierten, um den quantisierten Prädiktionswert ($\hat{P}_i$) verminderten empfangenen Leitungscodewort das Differenzcodewort ($\hat{D}_i$) für den adaptiven PCM-Rückquantisierer (13) gewonnen wird.

## Claims

1. Digital communication system wherein the bit rate on the transmission path is reduced, comprising a transmitter-side encoder which converts a sequence of digital input words into a line code of reduced bit rate, and a receiver-side decoder which converts the line code into a sequence of digital output words of the original bit rate, characterized in that this system is constructed in such a way that in the encoder every two successive input words ($X_{i-1}$, $X_i$) are added together (7) and subtracted from each other (6), that the sum ($S_i$) is converted into a sum code word ($\hat{S}_i + \hat{P}_i$) in a hybrid DPCM encoder (2), while the difference ($D_i$) is converted into a difference code word ($\hat{D}_i$) in an adaptive PCM quantizer (1), that the sum code word and the difference code word are subsequently combined (9) into the line code word ($C_i$), that in the receiver-side decoder the difference code word ($\hat{D}_i$) is separated from the received line code word ($C_i$), the sum code word ($\hat{S}_i + \hat{P}_i$) is decoded in a hybrid DPCM decoder (10, 11, Q1) and the difference code word ($\hat{D}_i$) is decoded in an adaptive PCM requantizer (13), that the two originally encoded input words ($X'_{i-1}$, $X'_i$) are recovered from the two decoded words ($\hat{D}'_i$, $S'_i$) by successive subtraction and addition and subsequent halving, and that the choice of the quantizing characteristics in the adaptive PCM quantizer (1) and in the adaptive PCM requantizer (13) is controlled by the hybrid DPCM encoder (2) and the hybrid DPCM decoder (10, 11, Q1), respectively, as a function of the prediction error present therein.

2. A system as claimed in Claim 1, characterized in that the word length of the line code ($C_i$) is chosen to be equal to the length of the input words ($X_i$), and that the quantizing characteristic of the adaptive PCM quantizer is controlled in such a way that maximum use in made of the length of the line code word composed of the sum code word and the difference code word.

3. A system as claimed in Claim 1 or 2, characterized in that in the decoder the quantized prediction value present in the hybrid DPCM encoder is subtracted from the received line code word ($C_i$) and the input code word ($\hat{S}_i$) for the DPCM decoder (11) is derived by quantizing the result in accordance with the DPCM encoding at the transmitting end.

4. A system as claimed in Claim 3, characterized in that the difference code word ($\hat{D}_i$) for the adaptive PCM requantizer (13) is obtained by subtracting the input word ($\hat{S}_i$) for the DPCM decoder (11) from the unquantized received line code word reduced by the quantized prediction value ($\hat{P}_i$).

## Revendications

1. Système de communication numérique dans lequel le débit binaire sur le trajet de transmission est réduit, comprenant un codeur, du côté transmission, convertissant une séquence de mots numériques d'entrée en un code de ligne à débit binaire réduit et un décodeur, du côté réception, convertissant le code de ligne en une séquence de mots numériques de sortie ayant le débit binaire original, caractérisé en ce que ce système est agencé de sorte que, dans le codeur, les deux mots successifs de chaque paire de mots d'entrée ($X_{i-1}$, $X_i$) sont additionnés l'un à l'autre (7) et soustraits l'un de l'autre (6), en ce que la somme ($\hat{S}_i$) est convertie en un mot codé de somme ($\hat{S}_i + P_i$) dans un codeur MIC-D hybride (2), tandis que la différence ($D_i$) est convertie en un mot codé de différence ($\hat{D}_i$) dans un quantificateur MIC adaptatif (1), en ce que le mot codé de somme et le mot codé de différence sont ensuite combinés (9) en un mot codé de ligne ($C_i$), en ce que, dans le décodeur du côté réception, le mot codé de différence ($\hat{D}_i$) est séparé du mot codé de ligne reçu ($C_i$), le mot codé de somme ($\hat{S}_i + \hat{P}_i$) est décodé dans un décodeur MIC-D hybride (10, 11, Q1), et le mot codé de différence ($\hat{D}_i$) est décodé dans un déquantificateur MIC adaptatif (13), en ce que les deux mots d'entrée originellement encodés ($X'_{i-1}$, $X'_i$) sont recouvrés à partir des deux mots décodés ($D'_i$, $S'_i$) par soustraction et addition successives, suivies d'une division par deux, et en ce que les caractéristiques de quantification, dans le quantificateur MIC adaptatif (1) et dans le déquantificateur MIC adaptatif (13), sont respectivement sélectionnées par le codeur MIC-D hybride (2) et le décodeur MIC-D hybride (10, 11, Q1), en fonction de l'erreur de prédiction qu'ils contiennent.

2. Système conforme à la revendication 1, caractérisé en ce que la longueur de mot du code de ligne ($C_i$) est choisie égale à la longueur des mots d'entrée ($X_i$) et en ce que la caractéristique de quantification du quantificateur MIC adaptatif est sélectionnée de manière à ce que soit utilisée au maximum la longueur du mot codé de ligne.

3. Système conforme à la revendication 1 ou 2, caractérisé en ce que, dans le décodeur, la valeur de prédiction quantifiée présente dans le codeur MIC-D hybride est soustraite du mot codé de ligne ($C_i$) et le mot codé d'entrée ($\hat{S}_i$) du décodeur MIC-D (11) est dérivé par quantification du résultat conformément au codage DPCM à l'extrémité de transmission.

4. Système conforme à la revendication 3, caractérisé en ce que le mot codé de différence ($\hat{D}_i$) destiné au déquantificateur MIC adaptatif (13) est obtenu en soustrayant le mot d'entrée ($\hat{S}_i$) du décodeur MIC-D (11) du mot codé de ligne reçu non quantifié diminué de la valeur de prédiction quantifiée ($\hat{P}_i$).

Fig.1

Fig.2

0 106 279